Europäisches Patentamt

European Patent Office

Office européen des brevets

(11) Veröffentlichungsnummer: **0 326 865**
**A2**

# (12) EUROPÄISCHE PATENTANMELDUNG

(21) Anmeldenummer: 89100909.4

(22) Anmeldetag: 20.01.89

(51) Int. Cl.⁴: **C09B 67/20** , **C09D 17/00**

(30) Priorität: 30.01.88 DE 3802752

(43) Veröffentlichungstag der Anmeldung:
09.08.89 Patentblatt 89/32

(84) Benannte Vertragsstaaten:
BE CH DE FR GB IT LI NL

(71) Anmelder: BASF Aktiengesellschaft
Carl-Bosch-Strasse 38
D-6700 Ludwigshafen(DE)

(72) Erfinder: Ludsteck, Dieter, Dr.
Rheinrugenstrasse 39
D-6700 Ludwigshafen(DE)
Erfinder: Flocken, Ottokar
Pariser Strasse 12a
D-6715 Lambsheim(DE)

(54) Verfahren zur Entstaubung von Nitrocellulose enthaltenden Pigmentzubereitungen.

(57) Die Erfindung betrifft ein Verfahren zur Entstaubung von Nitrocellulose enthaltenden Pigmentzubereitungen, bei dem die Entstaubung durch Behandeln der in Wasser suspendierten Zubereitung mit einem mit NC verträglichen Weichmacher erfolgt. Nach dem Isolieren und Trocknen erhält man eine Zubereitung, die weitgehend bis praktisch frei von Feinstaub von < 100 μm Teilchengröße ist.

EP 0 326 865 A2

## Verfahren zur Entstaubung von Nitrocellulose enthaltenden Pigmentzubereitungen

Nitrocellulose (NC) enthaltende Pigmentzubereitungen werden im großen Umfang und in unterschiedlichen Weisen zum Pigmentieren von Lakken, Anstrichfarben und Druckfarben verwendet. Die NC-enthaltenden Zubereitungen sind in der Regel spröde Massen, die wegen ihres mehr oder weniger hohen Anteils an NC meistens den Bestimmungen des Sprengstoffgesetzes unterliegen.

Die Gefährlichkeit einer trockenen Zubereitung ist naturgemäß sehr stark von deren Zusammensetzung abhängig, insbesondere von dem Gehalt an Nitrocellulose, der Art und der Menge des verwendeten Pigments und den Zuschlagstoffen. Während im allgemeinen grobe Teilchen so hohe Zündenergien benötigen, daß Gefahren durch elektrostatische Entladungen ausgeschlossen werden können, sinkt die Mindestzündenergie bei Teilchen unter 100 μm sehr rasch ab und kommt oft in den Gefährdungsbereich unter 20 mJ (gemessen im modifizierten Hartmannrohr mit definierter Funkenentladung eines Kondensators, VDI-Richtlinie 2263).

Die NC-enthaltenden Zubereitungen sind in zwei Formen im Handel: der Chipsform und der Griesform. Die Chipsform besteht aus etwa.1 mm starken,'unregelmäßig gebrochenen Blättchen. Diese Ware hat den Nachteil, daß sie relativ lange Zeit benötigt, um sich in den zur Anwendung geeigneten organischen Lösemitteln zu verteilen. Die Chips werden aus gewalzten und anschließend getrockneten Fellen durch Brechen hergestellt. Diese Operation ist gefährlich, weil die getrocknete Präparation in den meisten Fällen schlagempfindlich ist. Der Anteil an Feinstaub - d.h. von Teilchen von <100 μm - ist gering und liegt meist unter 1 Gew.%.

Hingegen liegt der Anteil an Feinstaub bei der Grießform, eines körnigen Produkt von 1-4 mm Korngröße, in der Regel bei 3-10 Gew.%. Diese Grießpräparation verteilt sich sehr leicht in geeigneten organischen Lösemitteln, ist aber wegen seines hohen Staubanteils erhöhten Zündgefahren ausgesetzt. Diese können hervorgerufen werden durch elektrostatische Entladungen, durch reibende Apparateteile oder durch Einwirkung von Schlag, Stoß oder Feuer.

Bei der Verarbeitung der Zubereitungen können sich die Feinstäube an nicht zugänglichen Stellen ansammeln und dort entzünden.

Ein häufig angewandtes Verfahren zur Entstaubung pulverförmiger Produkte besteht darin, daß man diese in einem Mischer mit geringen Mengen eines geeigneten hochsiedenden, inerten Öls benetzt und bis zur gleichmäßigen Verteilung verrührt oder durchmischt.

Dieses Verfahren ist zur Entstaubung von trokkenen Nitrocellulosezubereitungen ungeeignet. Bei der Zugabe von Weichmachern, die üblicherweise schon in der Zubereitung enthalten sind, bleiben erstere bereits an der örtlichen Zugabestelle hängen, führen zu Verklumpungen und lassen sich beim Verrühren nicht mehr auf der gesamten Oberfläche der Zubereitung verteilen. Auch das Besprühen der Produkte mit Weichmachern führt nicht zum Ziel, weil hierbei bevorzugt die groben, obenliegenden Teilchen und nicht die unten liegenden Staubanteile benetzt werden. Ein weiterer Nachteil: das Verrühren von trockenen Nitrocellulose enthaltenden Zubereitungen kann ohne Sicherheitsvorkehrungen nicht ausgeführt werden und bringt bei längerer Dauer zusätzlichen Abrieb und damit zusätzliche Feinanteile.

Aufgabe der Erfindung war es, ein Verfahren bereitzustellen, nach dem NC-enthaltende Zubereitungen in einem technisch leicht zu handhabenden Verfahren sicher entstaubt werden können.

Es wurde gefunden, daß man NC-enthaltenden Pigmentzubereitungen in einfacher Weise entstauben kann, wenn man zu einer wäßrigen Suspension der Zubereitung einen Nitrocellulose verträglichen Weichmacher gibt, das Gemisch durchmischt, die Zubereitung· in üblicher Weise abtrennt und trocknet.

Nachdem sich durch Aufdüsen von Weichmacher auf NC- enthaltende Zubereitungen nicht die gewünschte Entstaubung erzielen ließ, war es überraschend, daß nach dem erfindungsgemäßen Verfahren eine weitgehende bis praktisch vollständige Entstaubung der Zubereitungen erfolgt.

Die zur Entstaubung verwendeten NC-enthaltenden Zubereitungen können nach den bekannten Verfahren hergestellt werden. Vorteilhafterweise werden die Zubereitungen vorher in geeigneter Weise, z.B. durch Mahlen in wäßrigem Medium zerkleinert. Das erhaltene Mahlgut wird dann nach dem Verfahren der Erfindung entstaubt, isoliert und getrocknet.

Das Verfahren wird im allgemeinen so durchgeführt, daß man die Zubereitung in das Wasser einträgt oder das durch Mahlen in wäßrigem Medium erhaltene Mahlgut mit Wasser so einstellt, daß das wäßrige Gemisch durchmischbar ist. Dann gibt man unter Durchmischen den Weichmacher zu und mischt weiter bis die Zubereitung mit dem Weichmacher belegt ist. Dies ist in der Regel nach 0,1 bis 1 Stunde der Fall.

Die Zubereitung wird dann in bekannter Weise, z.B.' durch Filtrieren oder Sieben abgetrennt und getrocknet.

Die Menge an Wasser liegt bei etwa der ein- bis 5-fachen Menge der zu entstaubenden Zubereitung. Die Menge ist z.B. von den verwendeten Mischaggregat abhängig. Verwendet man z.B. einen Taumelmischer dann ist die Wassermenge geringer als bei Verwendung z.B. eines Rührbehälters mit einem Ankerrührer.

Als Weichmacher sind alle geeignet, die mit NC verträglich sind. Als Weichmacher kommen z.B. .Phthalate, Adipate, Citrate, Sebacinate, Fettsäureester, Carbonsäureester von höher molekularen Alkoholen, organische Phosphorsäureester, Ricinusöl verschiedener Qualität und Gemische davon in Betracht.

Bevorzugt sind die Phthalate und Adipate.

Die Menge an Weichmacher, die zur Entstaubung benötigt wird, hängt vor allem von dem Anteil der Zubereitung an Feinstaub ab.

In der Regel reichen - bezogen auf die zu entstaubende Zubereitung - 0,5 bis 5 Gew.% vorzugsweise 1 bis 3 Gew.% an Weichmacher aus.

Die Behandlung der Zubereitung mit dem Weichmacher erfolgt vorteilhafterweise bei Raumtemperatur, kann jedoch auch bei Temperaturen unterhalb oder oberhalb der Raumtemperatur erfolgen.

Das Isolieren der Zubereitung aus der Wasserphase kann in den hierfür geeigneten Apparaten wie Filtrier- und Siebapparaten erfolgen, z.B. auf Saug- oder Drucknutschen, Filterpressen oder Zentrifugen.

Das Trocknen der feuchten Zubereitung erfolgt wie bei NC-Zubereitungen üblich in besonderen Trockenschränken oder Trockenräumen.

Das Verfahren gemäß der Erfindung soll durch die folgenden Beispiele zusätzlich erläutert werden.

Die Teile sind Gewichtsteile und die Prozente sind Gewichtsprozente.

Beispiel 1

100 Teile einer Pigmentzubereitung, die aus 36 % Nitrocellulose, 52 % C.I. Pigment Blue 15:3, C.I. Nr. 74 160 und 12 % Phosphorsäureethylhexylester besteht, und 120 Teile Trinkwasser werden in einen Taumelmischer gefüllt. Der Mischer ist etwa zu zwei Dritteln gefüllt. Die trockene Zubereitung enthält 3,0 % Feinstaubanteile unter 100 μm Durchmesser. Dann werden 2 Teile Diethylhexylphthalat in den Mischer gegeben. Nach dem Verschließen des Einfüllstutzens wird 30 Minuten gemischt. Der Mischerinhalt wird auf eine Saugnutsche gegeben und so die Zubereitung isoliert. Nach dem Trocknen in einem Sicherheitsumlufttrockenschrank bei ca. 60° C erhält man eine Zubereitung, die weniger als 0,1 % Feinstaubanteil von < 100 μm Durchmesser enthält.

Das gleiche Ergebnis wird erhalten, wenn der Phthalsäureester durch den entsprechenden Adipinsäureester ersetzt wird.

Beispiel 2

Eine Pigmentzubereitung (bestehend aus 43 % Nitrocellulose, 44 % Ruß = C.I. Pigment Black 7, C.I. Nr. 77 266 und 13 % Diethylhexylphthalat) wird wie im Beispiel 1 verarbeitet. Die Zubereitung enthielt 5,2 % Feinstaub von < 100 μm. Nach der Entstaubung war der Feinstaubanteil von < 100 μm auf 0,2 % gesunken.

Beispiel 3

Verwendetes Produkt: Zubereitung aus 37 % Nitrocellulose, 54 % Pigment Red 57:1, C.I. 15 850:1 und 9 % Dibutylphthalat. Feinstaubanteil von < 100 μm: 2,6 %.

100 Teile der Zubereitung werden mit 100 Teilen Trinkwasser und 1,5 Teilen Dibutylphthalat analog Beispiel 1 behandelt. Das abgesaugte und getrocknete Produkt enthält 0,4 % Feinstaubanteil von < 100 μm.

Verwendet man anstelle von Dibutylphthalat den entsprechenden Sebacinsäureester, dann erhält man das gleiche Ergebnis.

Beispiel 4

Eine Präparation aus 47 % Nitrocellulose, 40 % Pigment Blue 1; C.I. 42 595:2 und 1 % Aminopolycarbonsäure mit einem Feinstaubanteil von 4,7 % wurde nach den Angaben des Beispiels 3 entstaubt. Die entstaubte Zubereitung enthält nur noch 0,2 % Feinanteil von < 100 μm Durchmesser.

Ansprüche

1. Verfahren zur Entstaubung von Nitrocellulose enthaltenden Pigmentzubereitungen, dadurch gekennzeichnet, daß man zu einer wäßrigen Suspension der Zubereitung einen mit Nitrocellulose verträglichen Weichmacher gibt, das Gemisch durchmischt, die Zubereitung in üblicher Weise abtrennt und trocknet.

2. Verfahren nach Anspruch 1, dadurch gekennzeichnet, daß man - bezogen auf die Zubereitung - 0,5 bis 5 Gew.% Weichmacher verwendet.

3. Verfahren nach Anspruch 1 oder 2, dadurch gekennzeichnet, daß man als Weichmacher Phthalate, Adipate, Citrate, Sebacinate, Fettsäureester, Carbonsäureester von hoher molekularen Alkoholen, organische Phosphorsäureester, Ricinisöl oder Gemische davon verwendet.